# EUROPÄISCHE PATENTANMELDUNG

(11) **EP 0 684 723 A2**
(43) Veröffentlichungstag der Anmeldung: **29.11.1995**
(21) Anmeldenummer: 95107999.5
(22) Anmeldetag: 24.05.1995
(51) Int. Cl.: H04M 1/02

(54) **Handfunkgerät**

(30) Priorität: 27.05.1994 DE 4418615
(71) Anmelder: SIEMENS AKTIENGESELLSCHAFT, D-80333 München (DE)
(72) Erfinder: Hofmann, Ludwig, Dipl. Ing., D-85304 Ilmmünster (DE); Dafcik, Juan, Dipl. Ing., D-85375 Neufahrn (DE)

(57) **Zusammenfassung**

Es ist eine Aufnahme für eine einschiebbare Identitätskarte vorgesehen, vor deren Öffnung ein Schalter zur An- und Abschaltung der Stromversorgung für die Identitätskarte angeordnet ist.

## Beschreibung

Die Erfindung bezieht sich auf ein Handfunkgerät mit einer in das Gerät einsetzbaren Identitätskarte. Eine solche Anordnung ist beispielsweise aus der DE 36 10 202 A1 bekannt. Diese beschreibt einen Sprechhörer, in dessen Gehäuse ein Aufnahmeraum für eine Karte ausgebildet ist.

Bei Verwendung einer einschiebbaren Full-Sice-Karte ist dafür zu sorgen, daß vor dem Öffnen der Kartenkontakte mit einem Schalter die Stromversorgung der Karte ausgeschaltet wird. Ein hierfür vorgesehener sogenannter Endschalter muß hinsichtlich seiner Position genau abgestimmt werden, damit diese Schaltsequenz eingehalten werden kann. Die Erkennung der Karte erfolgt dabei über die Kartenkante. Die Funktion von Kartenerkennung und An- und Abschaltung der Stromversorgung ist mit einem Kartenleser mit integriertem Endschalter oder mit einem getrennten, sehr genau platzierten Schalter zu gewährleisten.

Der Erfindung liegt die Aufgabe zugrunde, für diese Funktionen beim Handfunkgerät eine einfache Lösung anzugeben.

Diese Aufgabe wird gemäß der Erfindung in der Weise gelöst, daß eine Aufnahme für eine einschiebbare Identitätskarte vorgesehen ist, vor deren Öffnung ein Schalter zur An- und Abschaltung der Stromversorgung für die Identitätskarte angeordnet ist, der beim Rein- und Rausschieben der Identitätskarte betätigt wird.

Der Vorteil dieser Anordnung gegenüber dem eingangs beschriebenen, eine hohe Genauigkeit zwischen Schalter und Kartenkontakten erfordernden Aufbau besteht darin, daß durch die erfindungsgemäßen Maßnahmen eine grobere Abstimmung möglich ist. Erst nach dem Betätigen des Endschalters kann die Identitätskarte ein- bzw. ausgeführt werden. Eine sehr genaue Positionierung der Karte innerhalb des Kartenlesers ist dadurch nicht erforderlich.

Vorteilhafte Ausgestaltungen und Weiterbildungen des Erfindungsgegenstandes sind in den Unteransprüchen angegeben.

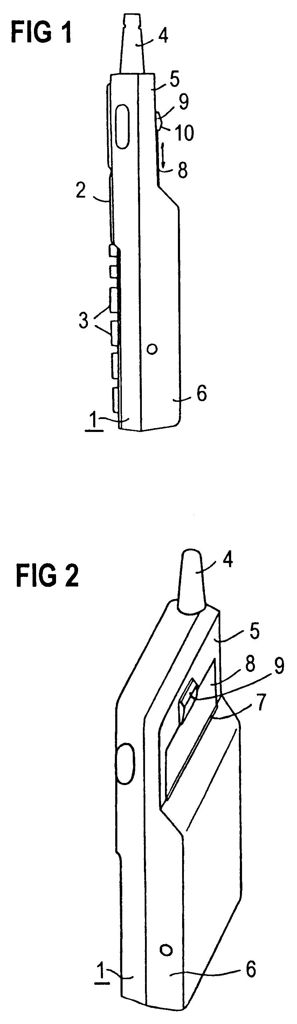

Nachstehend wird die Erfindung anhand eines in der Zeichnung dargestellten Ausführungsbeispieles näher erläutert. Die Figuren 1 und 2 zeigen ein Handfunkgerät, bei dem es sich beispielsweise um ein Mobiltelefon für die Verwendung innerhalb eines Mobilfunknetzes handelt, in einer Seitenansicht und einer perspektivischen Ansicht von unten.

Das Handfunkgerät 1 enthält an seiner Vorderseite im oberen Bereich ein Display 2 und darunterliegend eine Tastatur 3. An der oberen Stirnseite des Gerätes ist eine Antenne 4 angeordnet. Die Rückseite des Gerätegehäuses ist stufenförmig abgesetzt, wobei in dem unteren, dickeren Teil 6 Batterien angeordnet sein können. Im Bereich der Kante zwischen dünnerem oberen Teil 5 und dickerem unteren Teil 6 des Gerätegehäuses ist eine schlitzförmige Aufnahme 7 für eine Identitätskarte 8 angebracht. Im mittleren Bereich des oberen, dünneren Gehäuseteils 5 befindet sich ein Schalter, der als Druckschalter ausgebildet ist und dessen Taste 9 die Gehäuseoberfläche überragt. Die Taste 9 ist zur oberen und untern Stirnseite des Gehäuses hin abgeschrägt. Beim Einschieben der Identitätskarte 8 in die Aufnahme 7 gleitet diese mit ihrem Endbereich an der unteren, der schlitzförmigen Aufnahme zugekehrten Schräge 10 der Taste 9 entlang, wodurch der Schalter betätigt wird und die Stromversorgung für die Identitätskarte 8 angeschaltet wird. Im eingeschobenen Zustand liegt die Identitätskarte 8 mit ihrem hinteren Rand bündig am Rand der Taste 9 an und wird dadurch in ihrer Lage fixiert. Durch Drücken der Taste 9 für das Herausnehmen der Identitätskarte 8 aus der Aufnahme 7 erfolgt zum einen die Abschaltung der Stromversorgung und zum anderen die Freigabe der Identitätskarte 8 aus der Arretierung. Die Identitätskarte 8 gleitet mit ihrem Endbereich über die Abschrägung 10 der Taste 9, wodurch ein stärkeres Abbiegen der Identitätskarte und damit eine mögliche Beschädigung vermieden wird. Durch diese Ausgestaltung ist sichergestellt, daß der Schalter für die Anschaltung der Stromversorgung an die Identitätskarte jeweils zu Beginn des Einschiebens und des Herausnehmens der Identitätskarte betätigt wird.

## Patentansprüche

1. Handfunkgerät mit einer in das Gerät einsetzbaren Identitätskarte,
**dadurch gekennzeichnet,**
daß eine Aufnahme für die einschiebbare Identitätskarte vorgesehen ist, vor deren Öffnung ein Schalter zur An- und Abschaltung der Stromversorung für die Identitätskarte angeordnet ist, der beim Rein- und Rausschieben der Identitätskarte betätigt wird.

2. Handfunkgerät nach Anspruch 1,
**dadurch gekennzeichnet,**
daß die Aufnahme schlitzförmig ausgebildet ist.

3. Handfunkgerät nach Anspruch 1 oder 2,
**dadurch gekennzeichnet**,
daß die Aufnahme an der Rückseite des Gerätes im Bereich einer Gehäuseabstufung angeordnet ist.

4. Handfunkgerät nach einem der Ansprüche 1 bis 3,
**dadurch gekennzeichnet**,
daß der Schalter in einem Abstand vor der Öffnung der Aufnahme angeordnet ist, der dem aus der Aufnahme herausragenden Teil der Identitätskarte entspricht.

5. Handfunkgerät nach einem der Ansprüche 1 bis 4,
**dadurch gekennzeichnet**,
daß der Schalter eine aus der Rückseite des Gerätes herausragende Drucktaste aufweist.

6. Handfunkgerät nach einem der Ansprüche 1 bis 5,
**dadurch gekennzeichnet**,
daß die Identitätskarte im eingeschobenen Zustand bündig an der der Aufnahme zugekehrten Seite der Drucktaste anliegt.

7. Handfunkgerät nach Anspruch 5 oder 6,
**dadurch gekennzeichnet**,
daß die Drucktaste an der der Aufnahme zugekehrten Seite zur Gerätefläche hin angeschrägt ist.

8. Handfunkgerät nach Anspruch 7,
**dadurch gekennzeichnet**,
daß die Betätigung des Schalters durch die beim Rein- und Rausschieben über die Tastenschräge gleitende Identitätskarte erfolgt.

9. Handfunkgerät nach einem der Ansprüche 1 bis 8,
**dadurch gekennzeichnet**,
daß die Identitätskarte an der Rückseite des Gerätes von oben nach unten in die Aufnahme einschiebbar ist.
